# EUROPÄISCHE PATENTSCHRIFT

(11) **EP 0 865 331 B1**
(45) Veröffentlichungstag und Bekanntmachung des Hinweises auf die Patenterteilung: **05.04.2000**
(21) Anmeldenummer: 97943826.4
(22) Anmeldetag: 02.09.1997
(51) Int. Cl.: B21D 5/00, B21D 43/00

(54) **BIEGEZENTRUM**
BENDING CENTRE
CENTRE DE CINTRAGE

(30) Priorität: 26.09.1996 DE 19639590
(43) Veröffentlichungstag der Anmeldung: 23.09.1998
(73) Patentinhaber: Reinhardt Maschinenbau GmbH, 71065 Sindelfingen (DE)
(72) Erfinder: KUTSCHKER, Wolfgang, D-70034 Böblingen (DE)
(74) Vertreter: Beck, Jürgen, Dr. Dipl.-Phys.
(86) Internationale Anmeldenummer: EP9704772
(87) Internationale Veröffentlichungsnummer: WO9813153

(56) Entgegenhaltungen:
- FR-A- 2 584 633
- PATENT ABSTRACTS OF JAPAN vol. 016, no. 229 (M-1255), 27.Mai 1992 -& JP 04 046644 A (AMADA CO LTD), 17.Februar 1992,

## Beschreibung

Die Erfindung betrifft ein Biegezentrum und ein Verfahren zum Vorlegen eines Blechteils einer Biegezelle eines Biegezentrums gemäß dem Oberbegriff der Ansprüche 1 und 14.

Derartige Biegezentren sind aus dem Stand der Technik (JP-A-4046644) bekannt. Bei diesen besteht das Problem, daß gegebenenfalls Fehlpositionierungen auftreten, welche nachher Ausschußteile zur Folge haben.

Der Erfindung liegt daher die Aufgabe zugrunde, ein Biegezentrum der gattungsgemäßen Art derart zu verbessern, daß bei möglichst kurzen Beschickungszeiten eine möglichst fehlerfreie Handhabung des Blechteils erfolgt.

Diese Aufgabe wird bei einem Biegezentrum der eingangs beschriebenen Art erfindungsgemäß durch die Merkmale des Anspruchs 1 gelöst.

Der Vorteil der erfindungsgemäßen Lösung ist darin zu sehen, daß bei dieser die Manipulatoranordnung nicht ausschließlich dazu dient, das Blechteil in die Biegezelle einzuführen, sondern gleichzeitig dazu eingesetzt wird, das Blechteil ausgehend von einer Grobpositionierung im Bereich des Einlegetisches exakt zu positionieren, wobei diesem exakten Positionieren eine Bestimmung der Lage des Blechteils mit dem Sensor vorausgeht.

Damit ist eine erhebliche Reduzierung der Beschickungszeit erreichbar, da das zeitaufwendige exakte Positionieren des Blechteils vor Handhabung desselben durch die Manipulatoranordnung entfällt.

Darüber hinaus wird bei einer anfänglichen Fehlpositionierung eine fehlerhafte Handhabung des Blechteils durch die Manipulatoranordnung vermieden, da die Manipulatoranordnung nicht von einer exakten Ausgangsposition des Blechteils ausgeht, sondern durch den Sensor die Lage des Blechteils ohnehin ermittelt, und dann durch die Handhabung in der Manipulatoranordnung die Lage des Blechteils so korrigierbar ist, daß die exakte Einführposition erreichbar ist.

Prinzipiell ist es möglich, den einen oder mehrere Sensoren so anzuordnen, daß das Blechteil von diesen dann vermessen wird, wenn die Manipulatoranordnung das Blechteil an diesen vorbeibewegt. Aus Gründen der Rechenzeit ist es jedoch vorteilhaft, wenn die Steuerung die Lage des Blechteils vor der Handhabung desselben durch die Manipulatoranordnung ermittelt. Dies hat den Vorteil, daß keinerlei Verzögerung der Handhabung durch die Berechnung der Transferkoordinaten erforderlich ist, sondern diese bereits vor Beginn der Handhabung vorliegen.

Um die Lage des Blechteils mit möglichst wenig Sensoren bestimmen zu können, ist vorzugsweise vorgesehen, daß der Sensor in der ersten und der zweiten Richtung bewegbar ist, um somit die Möglichkeit zu schaffen, sowohl die Lage des Blechteils in der ersten als auch in der zweiten Richtung und die Verdrehung des Blechteils relativ zu diesen zu ermitteln.

Hierzu wäre es prinzipiell möglich, eine eigene, den Sensor bewegende Vorrichtung vorzusehen. Besonders vorteilhaft ist es jedoch, wenn der Sensor an der Manipulatoranordnung angeordnet und durch diese in mindestens einer Richtung bewegbar ist. Damit kann in dieser Richtung das Vorsehen einer lagegesteuerten Achsbewegung für den Sensor entfallen und die ohnehin vorhandene Achsbewegung der Manipulatoranordnung in dieser Richtung ausgenützt werden.

Da das Blechteil in der Regel in mehreren Stellungen in die Biegezelle eingeführt werden muß, ist vorzugsweise vorgesehen, daß die Manipulatoranordnung einen ersten, das Blechteil auf dem Einlegetisch greifenden und in der ersten Richtung bewegenden Manipulator und einen zweiten, das Blechteil nach der Bewegung in der ersten Richtung übernehmenden und in der zweiten Richtung bewegenden sowie um die Drehachse drehenden Manipulator aufweist. Durch diese Aufteilung der Handhabungsfunktionen für das Blechteil auf den ersten Manipulator und auf den zweiten Manipulator besteht die Möglichkeit, beide gleichzeitig arbeiten zu lassen und beispielsweise den ersten Manipulator bereits in Richtung des Blechteils zu bewegen, während der zweite Manipulator noch dabei ist, das vorausgehend diesem zugeführte Blechteil in unterschiedlichen Einführpositionen in die Biegezelle einzuführen.

Prinzipiell wäre ein beliebiges Greifen des Blechteils durch den ersten Manipulator denkbar. Als besonders vorteilhaft hat es sich jedoch erwiesen, wenn der erste Manipulator das Blechteil auf einer sich ungefähr in der ersten Richtung erstreckenden Längsseite greift, da dann ein Übergeben auf den zweiten Manipulator besonders einfach ist, der das Blechteil - um es sinnvoll um die Drehachse drehen zu können - in einem mittigen Bereich greifen sollte.

Hinsichtlich der Anordnung des Sensors wurden im Zusammenhang mit der bisherigen Erläuterung der einzelnen Ausführungsbeispiele keine näheren Angaben gemacht. So sieht eine zweckmäßige Ausführungsform vor, daß der Sensor mehrere Stellen eines diesem zugewandten Randbereichs des Blechteils erfaßt und somit nicht mehr gezwungen ist, mehrere Randbereiche zu erfassen, sondern über diese mehreren Stellen des einen Randbereichs eine vollständige Bestimmung der Lage des Blechteils durchführen kann.

Besonders zweckmäßig ist es, wenn der Sensor am ersten Manipulator angeordnet ist und durch diesen in der ersten Richtung bewegbar ist. Diese Lösung ist insofern zweckmäßig, als bei der Bewegung des ersten Manipulators in der Regel mehr Zeit zur Verfügung steht, auch noch die für den Sensor erforderlichen Bewegungen zu berücksichtigen, als beim zweiten Manipulator, da der zweite Manipulator die Aufgabe hat, das Blechteil in unterschiedlichen Stellungen der Biegezelle zuzuführen, während der erste Manipulator nur die Aufgabe hat, das Blechteil einmalig von dem Einlegetisch in den Aktionsbereich des zweiten Manipulators zu bewegen.

Mit dieser Lösung ist zwar die Bewegbarkeit des Sensors in der ersten Richtung gelöst, nicht jedoch die Bewegung des Sensors in der zweiten Richtung. Aus diesem Grund ist vorzugsweise vorgesehen, daß der Sensor an dem ersten Manipulator in Richtung der zweiten Richtung bewegbar gehalten ist. Diese zusätzliche Bewegbarkeit erlaubt es, nunmehr den Sensor in zwei zueinander senkrechte Richtungen zu bewegen und somit die Lage des Blechteils vollständig zu erfassen.

Hierzu ist vorzugsweise vorgesehen, daß die Position des Sensors in der zweiten Richtung steuerbar ist, so daß von der Steuerung festgelegt werden kann, an welchen Positionen in der ersten Richtung der Sensor eine Bewegung quer zur ersten Richtung, nämlich in Richtung der zweiten Richtung, durchführt. Damit ist die Steuerung in der Lage, definierte Stellen eines Blechteils, dessen Form der Steuerung eingegeben ist, anzufahren und diese Stellen mittels des Sensors zu vermessen, um daraus die Lage des Blechteils zu bestimmen.

Hinsichtlich der Anordnung des Sensors am ersten Manipulator wurden bislang keine näheren Angaben gemacht. So ist es besonders zweckmäßig, wenn der Sensor auf einer dem Einlegetisch zugewandten Seite des Manipulators angeordnet ist, da damit die Möglichkeit besteht, beim Bewegen des ersten Manipulators in Richtung des Einlegetisches, um dort ein Blechteil zu greifen, der Sensor bereits über das Blechteil bewegbar ist, bevor der Manipulator in einer Stellung steht, in welcher er in der Lage ist, das Blechteil zu greifen. Das heißt, daß in diesem Fall der Sensor dem Manipulator vorauseilend angeordnet ist und die ohnehin erforderliche Bewegung des Manipulators in Richtung des Einlegetisches bereits dazu ausgenutzt werden kann, um die erforderliche Bewegung des Sensors in der ersten Richtung zu erhalten, so daß gleichzeitig auch die mit dem ersten Sensor durchgeführte Messung, die für die Bewegung des ersten Manipulators zur Verfügung stehende Zeiträume nicht beeinträchtigt.

Hinsichtlich der Ausbildung des Sensors wurden im Zusammenhang mit der bisherigen Beschreibung der einzelnen Ausführungsbeispiele keine näheren Angaben gemacht. So wäre es beispielsweise möglich, mittels des Sensors Marken auf dem Blechteil zu erkennen und entsprechend dieser erkannten Marken die Lage des Blechteils zu erfassen. Besonders vorteilhaft ist es jedoch, wenn der Sensor ein Kanten des Blechteils detektierender Sensor ist, da in diesem Fall sich das spezielle Anbringen von Marken erübrigt, sondern die ohnehin am Blechteil vorhandenen Kanten zur Lagebestimmung desselben verwendet werden können.

Eine besonders zweckmäßige Lösung sieht dabei vor, daß mit der Steuerung basierend auf Daten über eine Form des Blechteils der Sensor so positionierbar ist, daß er Kanten von Ausschnitten des Blechteils erfaßt. Diese Lösung hat den großen Vorteil, daß die Ausschnitte die im Blechteil mit hoher Präzision hergestellt werden, exakte Anhaltspunkte für die Einführposition des Blechteils in die Biegezelle darstellen.

Im Rahmen der bisherigen Erläuterungen der einzelnen Ausführungsbeispiele wurde ferner nicht näher auf die Ausbildung des Sensors selbst eingegangen. So sieht eine vorteilhafte Ausführungsform vor, daß der Sensor eine in einer Gabel angeordnete Lichtschranke umfaßt und daß das Blechteil bei der Bestimmung der Kanten in die Gabel eingreift. Damit ist eine besonders einfache und präzise Erfassung der Kanten möglich, da die Gabel die Möglichkeit eröffnet, das Sendeelement und das Empfangselement der Lichtschranke in möglichst geringerer Entfernung oberhalb und unterhalb des Blechteils zu positionieren.

Darüber hinaus wird die eingangs genannte Aufgabe bei einem Verfahren zum Vorlegen eines Blechteils einer Biegezelle eines Biegezentrums erfindungsgemäß durch die Merkmale des Anspruchs 14 gelöst.

Der Vorteil des erfindungsgemäßen Verfahren ist ebenfalls darin zu sehen, daß die ohnehin erforderliche Handhabung des Blechteils zum Einlegen desselben in die Biegezelle nunmehr gleichzeitig dazu eingesetzt wird, das Blechteil ausgehend von einer Grobpositionierung exakt zu positionieren, so daß die bislang aus dem Stand der Technik bekannte exakte Positionierung des Blechteils entfallen kann und dadurch eine erhebliche Reduzierung der Beschickungszeiten bei gleichzeitig sicherer Handhabung des Blechteils die Folge ist.

Hinsichtlich des Orts der Vermessung der Lagekoordinaten des Blechteils wurden bislang keine näheren Angaben gemacht. So ist es prinzipiell ausreichend, wenn die Vermessung der Lagekoordinaten des Blechteils in der ersten Richtung vor Beendigung der Bewegung des Blechteils in der ersten Richtung beendet ist, so daß bei dieser Bewegung noch die Lage des Blechteils berücksichtigt und korrigiert werden kann.

Ferner ist es ausreichend, wenn die Vermessung des Blechteils in der zweiten Richtung und auch bezüglich einer Verdrehung zur zweiten Richtung vor Beendigung der Bewegung in der zweiten Richtung beendet ist, da mit der Bewegung in der zweiten Richtung dann die Korrektur der Lagekoordinaten in dieser Richtung erfolgen und gleichzeitig auch die Korrektur einer Verdrehung bezüglich der zweiten Richtung durchgeführt werden kann.

Eine besonders günstige Lösung sieht jedoch vor, daß die Bestimmung der Lagekoordinaten im Bereich des Einlegetisches erfolgt.

Besonders zweckmäßig ist es dabei, wenn die Lage des Blechteils vor der Handhabung durch den Manipulator gemessen wird, da somit Rechenzeit zur Verfügung steht, um die Steuergrößen für den Manipulator zu ermitteln und die Bewegungen durch den Manipulator nicht durch die Messung der Lage des Blechteils und die erforderliche Rechenzeit beeinträchtigt werden.

Besonders günstig läßt sich die Messung der Lagekoordinaten dann durchführen, wenn der Sensor bei der Messung der Lagekoordinaten relativ zum Blechteil bewegt wird, so daß in einfacher Weise bei ruhendem Blechteil die Vermessung der Lagekoordinaten desselben erfolgen kann.

Ein Bewegen des Sensors kann in unterschiedlichster Art und Weise erfolgen, beispielsweise durch für den Sensor vorgesehene Antriebe. Eine besonders vorteilhafte Lösung sieht vor, daß der Sensor bei der Messung der Lagekoordinaten von der Manipulatoranordnung in zumindest einer Richtung bewegt wird, so daß die ohnehin numerisch gesteuerte Bewegung der Manipulatoranordnung auch gleichzeitig zur Bewegung des Sensors eingesetzt werden kann.

Besonders vorteilhaft ist die erfindungsgemäße Lösung dann, wenn die Position des Sensors in der ersten Richtung über die Position der Manipulatoranordnung bestimmt wird, so daß die ohnehin für die Bewegung der Manipulatoranordnung erforderliche Positionsbestimmung gleichzeitig auch zur Bestimmung der Position des Sensors herangezogen werden kann.

Ferner ist bei einem derartigen vorteilhaften Ausführungsbeispiel, bei welchem der Sensor in einer Richtung von der Manipulatoranordnung bewegt wird, vorgesehen, daß der Sensor in der zweiten Richtung selbsttätig gesteuert bewegt wird, um bei dieser zusätzlichen Bewegung die übrigen Aktionen der Manipulatoranordnung nicht zu beeinträchtigen.

Insbesondere ist es hinsichtlich der Erreichung möglichst kurzer Beschickungszeiten von Vorteil, wenn das Blechteil vom Einlegetisch weg in der ersten Richtung von einem ersten Manipulator bewegt wird und in der zweiten Richtung von einem zweiten Manipulator bewegt und um die Drehachse gedreht wird. Diese Aufteilung der Handhabung des Blechteils ist deshalb günstig, weil das Einführen des Blechteils in die Biegezelle in der Regel mehrere Schritte erfordert und somit zeitaufwendig ist, so daß diese Zeit ausgenutzt werden kann, um vom ersten Manipulator ein Blechteil greifen zu lassen.

Gleichzeitig kann der erste Manipulator dann auch dazu eingesetzt werden, den Sensor in der ersten Richtung zu bewegen, wobei der Sensor dann vorzugsweise seinerseits relativ zum ersten Manipulator noch zusätzlich gesteuert in Richtung der zweiten Richtung bewegbar ist.

Hinsichtlich der Messung der Lagekoordinaten wurden bislang keine näheren Angaben gemacht. So sieht eine vorteilhafte Lösung vor, daß die Messung der Lagekoordinaten durch Messung von Kantenlagen des Blechteils erfolgt, wobei vorzugsweise Ausschnitte des Blechteils erfaßt werden, da diese Ausschnitte in definierter Lage in das Blechteil eingebracht werden und somit eine genaue Erfassung der Lagekoordinaten des Blechteils, insbesondere im Hinblick auf das Biegen des Blechteils im Biegezentrum ermöglichen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Ansicht eines Biegezentrums;
- Fig. 2: eine Draufsicht auf das Biegezentrums gemäß des Pfeils A in Fig. 1;
- Fig. 3: einen Schnitt längs Linie 3-3 in Fig. 2 und
- Fig. 4: einen Schnitt längs Linie 4-4 in Fig. 2.

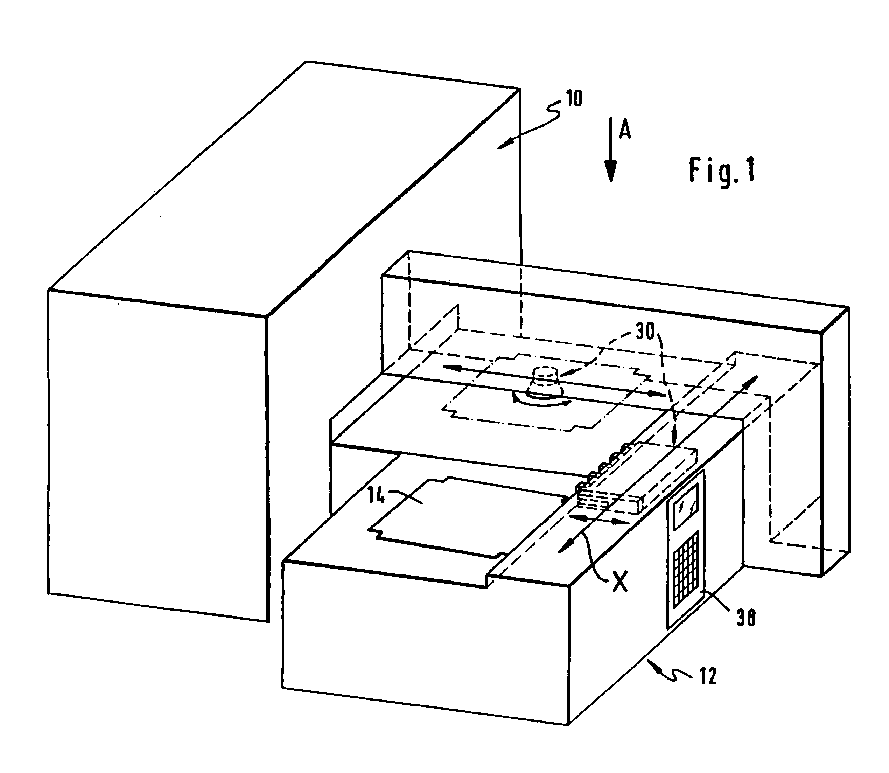

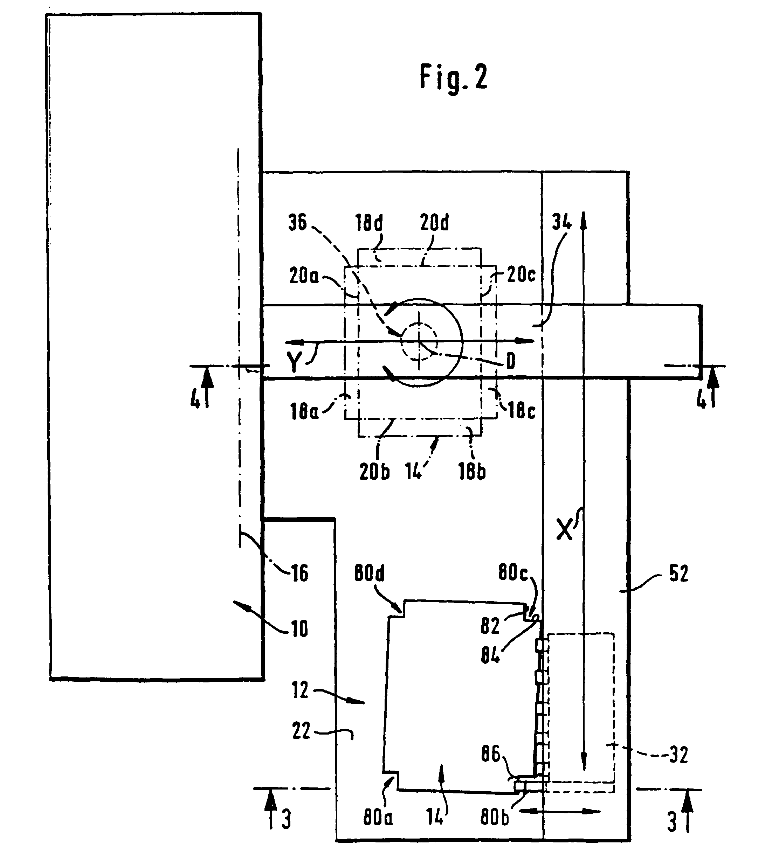

Ein in Fig. 1 dargestelltes Ausführungsbeispiel eines Biegezentrums umfaßt eine als Ganzes mit 10 bezeichnete Biegezelle und eine als Ganzes mit 12 bezeichnete Beschickungsvorrichtung, mit welcher ein Blechteil 14, wie in Fig. 2 verdeutlicht, der Biegezelle 10, insbesondere einer durch die strichpunktierte Biegelinie 16 symbolisierten Biegevorrichtung, in einer derart definierten Einführposition zuführbar ist, daß beispielsweise ein Umbiegen der Randbereiche 18a bis d des Blechteils 14 längs von geforderten und durch eine Form des Blechteils 14 festgelegten Biegelinien 20a bis d erfolgt. Damit ist beispielsweise die Einführposition für das Blechteil 14 derart definiert, daß alle Biegelinien 20a bis d des Blechteils 14 exakt deckungsgleich mit der Biegelinie 16 der Biegezelle 10 positioniert werden können.

Die Beschickungsvorrichtung 12 umfaßt hierzu einen Einlegetisch 22, auf welchen das Blechteil 14 manuell oder durch eine weitere Zuführvorrichtung auflegbar ist, wobei eine Grobpositionierung des Blechteils 14 in einem Greifbereich einer als Ganzes mit 30 bezeichneten Manipulatoranordnung ausreichend ist.

Die Manipulatoranordnung 30 umfaßt einen ersten Manipulator 32, welcher, wie in Fig. 1 und 2 dargestellt, zum Transport des Blechteils 14 in einer X-Richtung vom Einlegetisch 22 weg in einen Aktionsbereich 34 eines zweiten Manipulators 36 dient. Der zweite Manipulator 36 transportiert nach einem Greifen des Blechteils 14 dasselbe in einer Y-Richtung, welche vorzugsweise senkrecht zur X-Richtung verläuft, und dreht außerdem das Blechteil 14 um eine Drehachse D, welche senkrecht auf einer durch die X-Richtung und die Y-Richtung aufgespannten Ebene steht, wobei sich das Blechteil 14 in der durch die X-Richtung und die Y-Richtung aufgespannten Ebene erstreckt.

Beide Manipulatoren sind dabei gesteuert durch eine als Ganzes mit 38 bezeichnete Steuerung, in welcher auch die Form des Blechteils 14 und die Biegelinien 20a bis 20d sowie die Koordinaten der Biegelinie 16 der Biegezelle 10 abgespeichert sind.

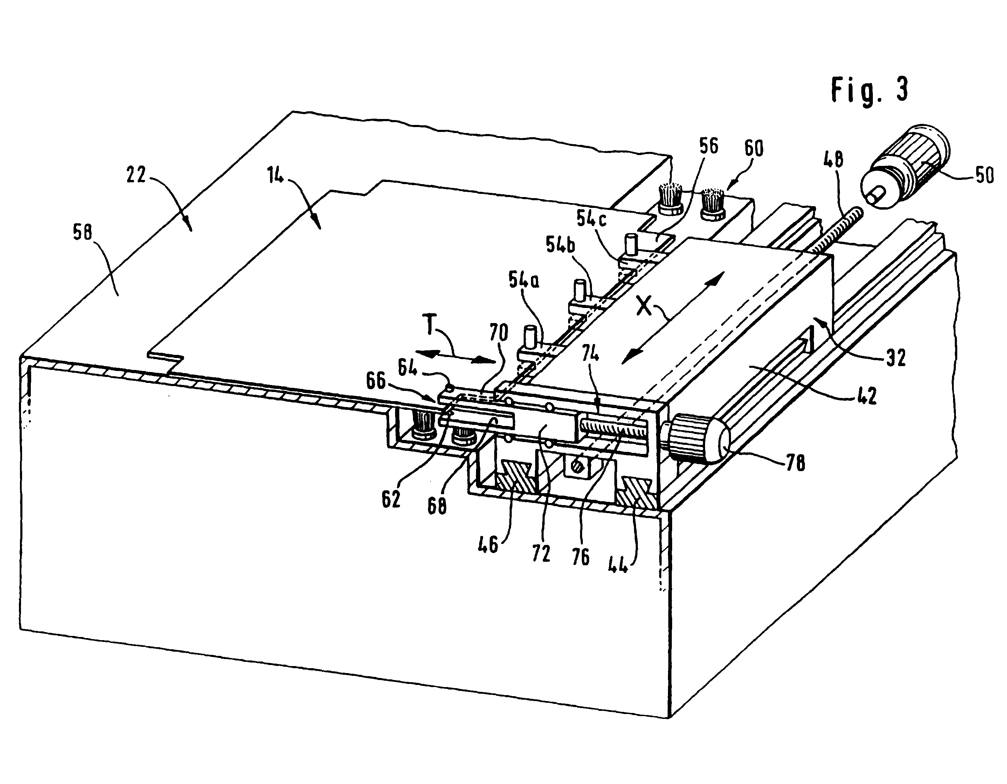

Der erste Manipulator 32 umfaßt, wie in Fig. 3 dargestellt, einen Manipulatorwagen 42, welcher auf zwei zueinander parallelen und sich in X-Richtung erstreckenden Linearführungen 44 und 46 geführt ist und beispielsweise mittels einer Gewindespindel 48, angetrieben durch einen Spindelantrieb 50, NC-gesteuert über die Steuerung 38 längs der X-Richtung positionierbar ist.

Die Linearführungen 44 und 46 mit dem Manipulatorwagen 42 sind dabei an einer Längsseite 52 der Beschickungsvorrichtung 12 angeordnet und somit auch längs des Einlegetisches 22 verfahrbar.

Auf seiner dem Einlegetisch 22 zugewandten Seite trägt der Manipulatorwagen 42 mehrere Greiferzangen 54a bis c, mit welchen das Blechteil 14 in einem dem Manipulatorwagen 42 zugewandten und sich ungefähr längs der X-Richtung erstreckenden Randbereich 56 greifbar ist.

Das Blechteil 14 liegt dabei im wesentlichen auf einer Oberfläche 58 des Einlegetisches 22 auf, die sich jedoch nicht bis zum Randbereich 56 erstreckt. Vielmehr wird der Randbereich 56 von einem Bürstenfeld 60 abgestützt, welche ein ungehindertes Zugreifen der Greiferzangen 54a bis c zuläßt.

An einem dem Aktionsbereich 34 des zweiten Manipulators abgewandten und dem Einlegetisch 22 zugewandten Ende des Manipulatorwagens 42 des ersten Manipulators 32 ist ferner ein ein Sendeelement 62 und ein Empfangselement 64 umfassender Sensor 66 gehalten, welcher beispielsweise nach dem Prinzip einer Lichtschranke arbeitet. Dabei ist das Sendeelement 62 an einem ersten Finger 68 und das Empfangselement 64 an einem zweiten Finger 70 einer als Ganzes mit 72 bezeichneten Sensorgabel gehalten, welche ihrerseits an einer am Manipulatorwagen 42 angeordneten Linearführung 74 gehalten und durch die Linearführung 74 in einer Richtung T, welche parallel zur Y-Richtung verläuft, beweglich ist. Die Positionierung der Sensorgabel 72 erfolgt dabei über eine Gewindespindel 76 sowie einen dieser zugeordneten Spindelantrieb 78 welcher ebenfalls eine NC-gesteuerte Positionierung des Sensors 66 in der T-Richtung, gesteuert durch die Steuerung 38, ermöglicht.

Die Sensorgabel 72 liegt dabei so, daß beim Bewegen derselben in T-Richtung auf das Blechteil 14 zu der zweite Finger 70 derselben eine Oberseite des Blechteils 14 übergreift und der erste Finger 68 desselben eine Unterseite des Blechteils 14 untergreift, um mittels des Sensors 66 Kantenlagen im Randbereich 56 zu erfassen.

Wie in Fig. 2 dargestellt, werden die Kantenlagen vorzugsweise im Bereich von vorher in das Blechteil 14 geschnittenen Ausklinkungen 80b und 80c erfaßt, wobei in der dem ersten Manipulator 32 und dem zweiten Manipulator 36 zugewandten Ausklinkung 80c eine quer zur Y-Richtung verlaufende Kante 82 und eine quer zur X-Richtung verlaufende Kante 84 und im Bereich der dem ersten Manipulator 32 zugewandten Ausklinkung 80b nur noch die quer zur Y-Richtung verlaufende Kante 86 erfaßt werden. Durch das Erfassen der Ausklinkungen 80b und c ist eine exakte Erfassung der Position des Blechteils 14 relativ zur späteren Einführposition in die Biegezelle 10 möglich, da die Ausklinkungen 80a bis d in definierter Relativanordnung zueinander in das Blechteil 14 geschnitten wurden und andererseits auch die Ausklinkungen 80a bis d exakt die am Blechteil 14 gewünschten Biegelinien 20a bis d definieren.

Über die Lage der Kanten 82, 84 und 86 relativ zur Einführposition und insbesondere zur Biegelinie 16 der Biegezelle 10 ist die Lage des Blechteils 14 auf dem Einlegetisch 22 exakt bestimmbar und insbesondere ist für die Steuerung 38 exakt bestimmbar, um welche Strecke in X-Richtung das Blechteil 14 mit dem ersten Manipulator 32 in Richtung des zweiten Manipulators 36 bewegt werden muß, um sicherzustellen, daß dieser das Blechteil 14 in einer Position greift, welche die Relativposition der Biegelinien 20b und 20d relativ zur Drehachse D exakt festlegt. Die Grobpositionierung des Blechteils 14 auf dem Einlegetisch 22 in der X-Richtung wird somit durch den Transport des Blechteils 14 mittels des ersten Manipulators 32 in der X-Richtung in eine exakte Positionierung bezüglich der X-Richtung korrigiert.

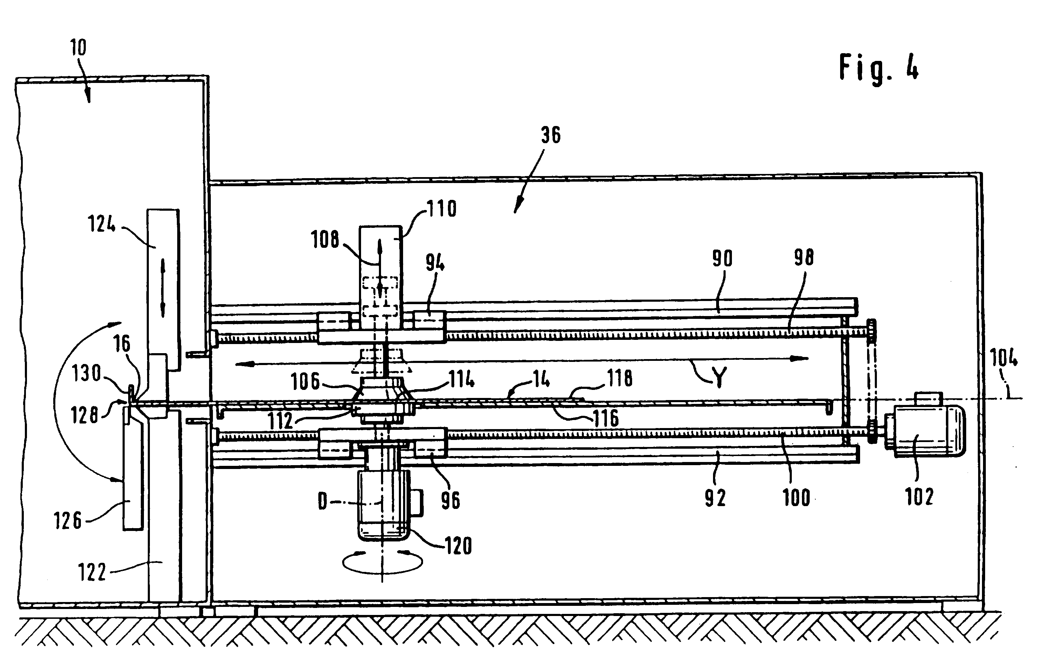

Wie in Fig. 4 dargestellt umfaßt der zweite Manipulator 36 zwei sich in Y-Richtung parallel zueinander erstreckende Linearführungen, nämlich eine obere Linearführung 90 und eine untere Linearführung 92, wobei an der oberen Linearführung 90 ein oberer Führungswagen 94 und an der unteren Linearführung 92 ein unterer Führungswagen 96 synchron zueinander und einander gegenüberliegend geführt sind. Hierzu ist jeder der Führungswagen über eine Gewindespindel 98 bzw. 100 in Y-Richtung positionierbar. Die beiden Gewindespindeln 98 und 100 sind über einen gemeinsamen Spindelantrieb 102 antreibbar, so daß die Bewegung der Führungswagen 94 und 96 in der Y-Richtung ebenfalls in Form einer NC-gesteuerten Achse erfolgt.

Die beiden Führungswagen 94 und 96 sind auf gegenüberliegenden Seiten einer Bewegungsebene 104 des zu handhabenden Blechteils 14 angeordnet, wobei zum Greifen des Blechteils 14 am oberen Führungswagen 94 eine Greiferglocke 106 angeordnet ist, die in einer Richtung 108 senkrecht zur Bewegungsebene 104 mittels eines Spannzylinders 110 bewegbar ist. Am unteren Führungswagen 96 ist ein Greiferteller 112 vorgesehen, welcher sich mit einer Tellerfläche ungefähr in der Ebene 104 erstreckt und damit in der Lage ist, das Blechteil 14 auf einer Unterseite 116 abzustützen. Gleichzeitig ist das Blechteil zwischen dem Greiferteller 112 und der Greiferglocke 106 dadurch einspannbar, daß die Greiferglocke 106 durch den Spannzylinder 110 auf eine Oberseite 118 des Blechteils 14 drückt.

Anstelle der Greiferglocke 106 und des Greifertellers 112 sind beispielsweise auch schmale Rechteckleisten einsetzbar.

Sowohl der Greiferteller 112 als auch die Greiferglocke 106 sind an dem jeweiligen Führungswagen 96 bzw. 94 um die gemeinsame Drehachse D drehbar gelagert, wobei der Greiferteller 112 durch einen Drehantrieb 120 drehbar ist. Der Drehantrieb 120 ist durch die Steuerung 38 numerisch ansteuerbar, und somit stellt die Drehachse D eine NC-gesteuerte Drehachse dar.

Wie ferner in Fig. 4 dargestellt, umfaßt die Biegezelle 10 eine übliche Biegevorrichtung mit einer Unterwange 122, einer relativ zu dieser bewegbaren Oberwange 124 sowie einer Biegewange 126, welche um eine Schwenkachse 128 schwenkbar ist, um beispielsweise an dem Blechteil 14 einen außerhalb der Biegelinien 20a bis d liegenden Randbereich 130 umzubiegen. Dabei wird die Biegelinie 16 der Biegezelle 10 durch Spannwerkzeuge der Unterwange 122 und der Oberwange 124 festgelegt.

Das - wie bereits beschrieben - von dem ersten Manipulator 32 in X-Richtung im Aktionsbereich 34 des zweiten Manipulators 36 exakt positionierte Blechteil 14 wird nun vom zweiten Manipulator 36, das heißt mittels des Greifertellers 112 und der Greiferglocke 106, gegriffen und fest zwischen diesen eingespannt. Durch die NC-gesteuerte Bewegung der beiden in Y-Richtung läßt sich gleichzeitig eine exakte Positionierung des Blechteils in Y-Richtung relativ zur Biegelinie 16 durchführen und gleichzeitig eine mögliche Verdrehung der für das Blechteil 14 vorgesehenen Biegelinien 20 relativ zur Biegelinie 16 der Biegezelle 10 korrigieren, so daß das Blechteil 14 mit den vorgesehenen Biegelinien 20 exakt an der Biegelinie 16 der Biegezelle 10 positionierbar ist.

Wie bereits beschrieben, erfolgt die Ermittlung der Lagekoordinaten des Blechteils 14 auf dem Einlegetisch 22 in ruhender Stellung desselben, wobei die Lage der quer zur X-Richtung verlaufenden Kante 84 bereits exakt ermitteln läßt, um welche Distanz das Blechteil 14 vom ersten Manipulator 32 zum zweiten Manipulator 36 zu bewegen ist. Gleichzeitig wird durch die Lage der beiden quer zur Y-Richtung verlaufenden Kanten 82 und 86 einerseits ermittelt, um welche Strecken später das Blechteil 14 mittels des zweiten Manipulators 36 in Richtung der Biegezelle zu bewegen ist und gleichzeitig ermittelt, inwieweit eine Verdrehung des Blechteils 14 gegenüber der X-Richtung oder der Y-Richtung vorliegt, wobei diese Verdrehung bei von dem zweiten Manipulator 36 gegriffenem Blechteil 14 durch Drehung um die Drehachse D korrigierbar ist. Damit ist, wie in Fig. 4 dargestellt, beispielsweise während des Bewegens des Blechteils 14 vom Einlegetisch 22 zur Biegezelle 10 mittels der Manipulatoren 32 und 36 zunächst die Biegelinie 20a exakt mit der Biegelinie 16 in Deckung zu bringen, um den Rand 130 umzubiegen. Die nachfolgenden Bewegungen des zweiten Manipulators 36 bestehen nunmehr nur noch darin, entsprechend der der Steuerung 38 eingegebenen Form des Blechteils 14 durch Drehen desselben die übrigen Biegelinien 20b bis 20d ebenfalls zur Durchführung der Biegeoperation mit der Biegelinie 16 der Biegezelle in Deckung zu bringen.

## Patentansprüche

1. Biegezentrum umfassend eine Biegezelle (10) und eine Beschickungsvorrichtung (12) mit einem Einlegetisch (22) zur Aufnahme eines einzulegenden Blechteils (14), mit einer Manipulatoranordnung (30), mittels welcher das Blechteil (14) auf dem Einlegetisch (22) greifbar und in einer ersten Richtung (X) sowie einer zweiten, quer zur ersten Richtung verlaufenden Richtung (Y) bewegbar sowie um eine zu einer durch die erste und die zweite Richtung (X/Y) aufgespannten Ebene senkrechten Drehachse (D) drehbar ist, mit einem Kanten des Blechteils (14) detektierendem Sensor (66), mittels welchem die Lage des Blechteils (14) relativ zu einer definierten Einführposition (16, 20a bis d) in die Biegezelle (10) bestimmbar ist, und mit einer Steuerung (38), welche aufgrund der vom Sensor (66) bestimmten Lage des Blechteils (14) die das Blechteil (14) handhabende Manipulatoranordnung (30) hinsichtlich der Bewegung in der ersten (X) und zweiten Richtung (Y) sowie der Drehung um die Drehachse (D) derart steuert, daß die Manipulatoranordnung (30) das Blechteil (14) in der genau definierten Einführposition (16, 20a bis d) in die Biegezelle (10) einführt,
**dadurch gekennzeichnet**, daß mittels der Steuerung (38) der Sensor (66) und das Blechteil (14) relativ zueinander derart bewegbar sind, daß der Sensor (66) zur Ermittlung der Lagekoordinaten des Blechteils (14) mehrere in definierter Relativanordnung zueinander durch Ausschneiden vorab in das Blechteil (14) als exakte Anhaltspunkte für die Einführposition des Blechteils (14) eingebrachte Schnittkantenlagen (82, 84, 86) erfaßt.

2. Biegezentrum nach Anspruch 1, dadurch gekennzeichnet, daß die Steuerung (38) die Lage des Blechteils (14) vor der Handhabung desselben durch die Manipulatoranordnung (30) ermittelt.

3. Biegezentrum nach Anspruch 1 oder 2, dadurch gekennzeichnet, daß der Sensor (66) in der ersten (X) und der zweiten Richtung (Y) bewegbar ist.

4. Biegezentrum nach Anspruch 3, dadurch gekennzeichnet, daß der Sensor (66) an der Manipulatoranordnung (30) angeordnet und durch diese in mindestens einer Richtung (X) bewegbar ist.

5. Biegezentrum nach einem der voranstehenden Ansprüche, dadurch gekennzeichnet, daß die Manipulatoranordnung (30) einen ersten, das Blechteil (14) auf den Einlegetisch (22) greifenden und in der ersten Richtung (X) bewegenden Manipulator (32) und einen zweiten, das Blechteil (14) nach der Bewegung in der ersten Richtung (X) übernehmenden und in der zweiten Richtung (Y) bewegenden sowie um die Drehachse (D) drehenden Manipulator (36) aufweist.

6. Biegezentrum nach Anspruch 5, dadurch gekennzeichnet, daß der erste Manipulator (32) das Blechteil (14) auf einer sich ungefähr in der ersten Richtung (X) erstreckenden Längsseite (56) greift.

7. Biegezentrum nach einem der voranstehenden Ansprüche, dadurch gekennzeichnet, daß der Sensor (66) mehrere Stellen (82, 84, 86) eines diesem zugewandten Randbereichs (56) des Blechteils (14) erfaßt.

8. Biegezentrum nach einem der Ansprüche 5 bis 7, dadurch gekennzeichnet, daß der Sensor (66) am ersten Manipulator (32) angeordnet und durch diesen in der ersten Richtung (X) bewegbar ist.

9. Biegezentrum nach Anspruch 8, dadurch gekennzeichnet, daß der Sensor (66) an dem ersten Manipulator (32) in Richtung der zweiten Richtung (T) bewegbar gehalten ist.

10. Biegezentrum nach Anspruch 9, dadurch gekennzeichnet, daß die Position des Sensors (66) in der zweiten Richtung (T) von der Steuerung (38) steuerbar ist.

11. Biegezentrum nach einem der Ansprüche 5 bis 10, dadurch gekennzeichnet, daß der Sensor (66) auf einer dem Einlegetisch (22) zugewandten Seite des ersten Manipulators (32) angeordnet ist.

12. Biegezentrum nach einem der voranstehenden Ansprüche, dadurch gekennzeichnet, daß mit der Steuerung (38) basierend auf Daten über eine Form des Blechteils (14) der Sensor (66) so positionierbar ist, daß er Kanten (82, 84, 86) von Ausklinkungen (80a bis d) des Blechteils (14) erfaßt.

13. Biegezentrum nach einem der voranstehenden Ansprüche, dadurch gekennzeichnet, daß der Sensor (66) eine in einer Gabel (72) angeordnete Lichtschranke umfaßt und daß das Blechteil (14) bei der Bestimmung der Kanten (82, 84, 86) in die Gabel (72) eingreift.

14. Verfahren zum Vorlegen eines Blechteils (14) einer Biegezelle (10) eines Biegezentrums, bei welchem das Blechteil (14) auf einem Einlegetisch (22) von einer Manipulatoranordnung (30) gegriffen und in einer ersten Richtung (X) und einer zweiten, quer zur ersten verlaufenden Richtung (Y) bewegt sowie in verschiedenen Drehstellungen um eine senkrecht zur von der ersten und der zweiten Richtung aufgespannten Ebene stehende Drehachse (D) in die Biegezelle (10) eingeführt wird, wobei die Lagekoordinaten des Blechteils (14) relativ zu einer definierten Einführposition in die Biegezelle mittels eines Sensors (66) gemessen werden und aufgrund der gemessenen Lagekoordinaten die das Blechteil (14) handhabende Manipulatoranordnung (30) die Bewegung in der ersten und der zweiten Richtung (X,Y) sowie durch Drehung um die Drehachse (D) derart korrigiert, daß das Blechteil (14) in der definierten Einführposition der Biegezelle (10) zugeführt wird, dadurch gekennzeichnet, daß mittels der Steuerung (38) der Sensor (66) und das Blechteil (14) relativ zueinander derart bewegt werden, daß von dem Sensor (66) zur Ermittlung der Lagekoordinaten des Blechteils (14) mehrere in definierter Relativanordnung zueinander durch vorheriges Ausschneiden in das Blechteil (14) als exakte Anhaltspunkte für die Einführposition des Blechteils (14) eingebrachte Schnittkantenlagen (82, 84, 86) erfaßt werden.

15. Verfahren nach Anspruch 14, dadurch gekennzeichnet, daß die Lagekoordinaten des Blechteils (14) im Bereich des Einlegetisches (22) bestimmt werden.

16. Verfahren nach Anspruch 14 oder 15, dadurch gekennzeichnet, daß die Lagekoordinaten des Blechteils (14) vor der Handhabung desselben durch die Manipulatoranordnung (30) gemessen werden.

17. Verfahren nach einem der Ansprüche 14 bis 16, dadurch gekennzeichnet, daß bei der Bestimmung der Lagekoordinaten des Blechteils (14) der Sensor (66) relativ zu diesem bewegt wird.

18. Verfahren nach Anspruch 17, dadurch gekennzeichnet, daß der Sensor (66) bei der Messung der Lagekoordinaten von der Manipulatoranordnung (30) in zumindest einer Richtung (X) bewegt wird.

19. Verfahren nach Anspruch 18, dadurch gekennzeichnet, daß die Position des Sensors (66) in der ersten Richtung (X) über die Position der Manipulatoranordnung (30) bestimmt wird.

20. Verfahren nach einem der Ansprüche 17 bis 19, dadurch gekennzeichnet, daß der Sensor (66) in einer Richtung von der Manipulatoranordnung (30) bewegt wird, daß der Sensor (66) in der zweiten Richtung (Y) selbsttätig gesteuert bewegt wird.

21. Verfahren nach einem der Ansprüche 14 bis 20, dadurch gekennzeichnet, daß das Blechteil (14) vom Einlegetisch (22) weg in der ersten Richtung (X) von einem ersten Manipulator (32) bewegt wird und in der zweiten Richtung (Y) von einem zweiten Manipulator (36) bewegt und um die Drehachse (D) gedreht wird.

22. Verfahren nach einem der Ansprüche 14 bis 21, dadurch gekennzeichnet, daß Ausklinkungen (80a bis d) des Blechteils (14) erfaßt werden.

## Claims

1. Bending centre comprising a bending unit (10) and a loading device (12) with a feed table (22) for receiving a sheet-metal part (14) to be inserted, a manipulator arrangement (30) for gripping the sheet-metal part (14) on the feed table (22) and moving it in a first direction (X) as well as a second direction (Y) extending transversely to the first direction as well as rotating it about an axis of rotation (D) at right angles to a plane defined by the first and the second directions (X/Y), a sensor (66) detecting edges of the sheet-metal part (14) for determining the position of the sheet-metal part (14) relative to a defined insertion position (16, 20a to d) into the bending unit (10), and a control (38) controlling the manipulator arrangement (30) handling the sheet-metal part (14) with respect to the movement in the first direction (X) and second direction (Y) as well as the rotation about the axis of rotation (D) on the basis of the position of the sheet-metal part (14) determined by the sensor (66) in such a manner that the manipulator arrangement (30) inserts the sheet-metal part (14) into the bending unit (10) in the exactly defined insertion position (16, 20a to d), **characterized** in that by means of the control (38), the sensor (66) and the sheet-metal part (14) are movable relative to each other in such a manner that in order to determine the position coordinates of the sheet-metal part (14) the sensor (66) detects several cut edge positions (82, 84, 86) provided previously by cutting in a defined arrangement relative to one another in the sheet-metal part (14) as exact points of reference for the insertion position of the sheet-metal part (14).

2. Bending centre as defined in claim 1, characterized in that the control (38) ascertains the position of the sheet-metal part (14) prior to the handling thereof by the manipulator arrangement (30).

3. Bending centre as defined in claim 1 or 2,
characterized in that the sensor (66) is movable in the first direction (X) and the second direction (Y).

4. Bending centre as defined in claim 3, characterized in that the sensor (66) is arranged on the manipulator arrangement (30) and is movable by this in at least one direction (X).

5. Bending centre as defined in any one of the preceding claims, characterized in that the manipulator arrangement (30) has a first manipulator (32) gripping the sheet-metal part (14) on the feed table (22) and moving it in the first direction (X), and a second manipulator (36) taking over the sheet-metal part (14) following the movement in the first direction (X) and moving it in the second direction (Y) as well as rotating it about the axis of rotation (D).

6. Bending centre as defined in claim 5, characterized in that the first manipulator (32) grips the sheet-metal part (14) on a longitudinal side (56) extending approximately in the first direction (X).

7. Bending centre as defined in any one of the preceding claims, characterized in that the sensor (66) detects several locations (82, 84, 86) of an edge region (56) of the sheet-metal part (14) facing it.

8. Bending centre as defined in any one of claims 5 to 7, characterized in that the sensor (66) is arranged on the first manipulator (32) and is movable by this in the first direction (X).

9. Bending centre as defined in claim 8, characterized in that the sensor (66) is held on the first manipulator (32) so as to be movable in the direction of the second direction (Y).

10. Bending centre as defined in claim 9, characterized in that the position of the sensor (66) in the second direction (Y) is controllable by the control (38).

11. Bending centre as defined in any one of claims 5 to 10, characterized in that the sensor (66) is arranged on a side of the first manipulator (32) facing the feed table (22).

12. Bending centre as defined in any one of the preceding claims, characterized in that the sensor (66) is positionable with the control (38) based on data concerning a shape of the sheet-metal part (14) such that it detects edges (82, 84, 86) of cutouts (80a to d) of the sheet-metal part (14).

13. Bending centre as defined in any one of the preceding claims, characterized in that the sensor (66) comprises a light barrier arranged in a forked member (72), and that the sheet-metal part (14) engages in the forked member (72) during the determination of the edges (82, 84, 86).

14. Process for introducing a sheet-metal part (14) to a bending unit (10) of a bending centre, wherein the sheet-metal part (14) is gripped on a feed table (22) by a manipulator arrangement (30) and moved in a first direction (X) and a second direction (Y) extending transversely to the first as well as inserted into the bending unit (10) in various rotary positions around an axis of rotation (D) extending at right angles to the plane defined by the first and the second directions, wherein the position coordinates of the sheet-metal part (14) relative to a defined insertion position into the bending unit are measured by means of a sensor (66), and the manipulator arrangement (30) handling the sheet-metal part (14) corrects the movement in the first and the second directions (X,Y) as well as by rotation about the axis of rotation (D) on the basis of the measured position coordinates in such a manner that the sheet-metal part (14) is supplied to the bending unit (10) in the defined insertion position, characterized in that by means of the control (38), the sensor (66) and the sheet-metal part (14) are moved relative to each other in such a manner that in order to determine the position coordinates of the sheet-metal part (14) several cut edge positions (82, 84, 86) provided by previous cutting in a defined arrangement relative to one another in the sheet-metal part (14) are detected by the sensor (66) as exact points of reference for the insertion position of the sheet-metal part (14).

15. Process as defined in claim 14, characterized in that the position coordinates of the sheet-metal part (14) are determined in the region of the feed table (22).

16. Process as defined in claim 14 or 15, characterized in that the position coordinates of the sheet-metal part (14) are measured prior to the handling thereof by the manipulator arrangement (30).

17. Process as defined in any one of claims 14 to 16, characterized in that the sensor (66) is moved relative to the sheet-metal part (14) during the determination of the position coordinates thereof.

18. Process as defined in claim 17, characterized in that the sensor (66) is moved by the manipulator arrangement (30) in at least one direction (X) during the measurement of the position coordinates.

19. Process as defined in claim 18, characterized in that the position of the sensor (66) in the first direction (X) is determined via the position of the manipulator (30) arrangement.

20. Process as defined in any one of claims 17 to 19, characterized in that the sensor (66) is moved in one direction by the manipulator arrangement (30), that the sensor (66) is moved in the second direction (Y) in an automatic and controlled manner.

21. Process as defined in any one of claims 14 to 20, characterized in that the sheet-metal part (14) is moved away from the feed table (22) in the first direction (X) by a first manipulator (32) and is moved in the second direction (Y) by a second manipulator (36) and rotated about the axis of rotation (D).

22. Process as defined in any one of claims 14 to 21, characterized in that cutouts (80a to d) of the sheet-metal part (14) are detected.

## Revendications

1. Centre de cintrage comprenant une cellule de cintrage (10) et un dispositif de chargement (12) avec une table de chargement (22) pour recevoir une pièce de tôle (14) à charger, avec un dispositif de manipulation (30) au moyen duquel la pièce de tôle (14) peut être saisie sur la table de chargement et peut être déplacée dans une première direction (X) ainsi que dans une deuxième direction (Y) transversale à la première direction et peut aussi être amenée à pivoter autour d'un axe de rotation (D) vertical par rapport à un plan formé par la première et la deuxième direction (X/Y), avec un capteur (66) détectant les arêtes de la pièce de tôle au moyen duquel la position de la pièce de tôle (14) peut être déterminée par rapport à une position d'introduction (16, 20a à d) définie dans la cellule de cintrage (10), et avec une commande (38) qui, en raison de la position de la pièce de tôle (14) déterminée par le capteur (66), pilote le dispositif de manipulation (30) maniant la pièce de tôle (14) en ce qui concerne le mouvement dans la première (X) et la deuxième direction (Y) ainsi que la rotation autour de l'axe de rotation (D) de telle manière que le dispositif de manipulation (30) introduise la pièce de tôle (14) dans la cellule de cintrage (10) dans la position d'introduction définie avec précision, **caractérisé en ce que** le capteur (66) et la pièce de tôle (14) peuvent être déplacés l'un par rapport à l'autre par la commande (38) de telle manière que, pour déterminer les coordonnées de la position de la pièce de tôle (14), le capteur (66) détecte plusieurs positions (82, 84, 86) des arêtes de coupe résultant d'un découpage préalable dans la pièce de tôle (14) et placées dans une disposition relative les unes par rapport aux autres comme repères précis pour la position d'introduction de la pièce de tôle (14).

2. Centre de cintrage selon la revendication 1, caractérisé en ce que la commande (38) détermine la position de la pièce de tôle (14) avant le maniement de celle-ci par le dispositif de manipulation (30).

3. Centre de cintrage selon la revendication 1 ou 2, caractérisé en ce que le capteur (66) peut être déplacé dans la première (X) et dans la deuxième direction (Y).

4. Centre de cintrage selon la revendication 3, caractérisé en ce que le capteur (66) est placé sur le dispositif de manipulation (30) et peut être déplacé par celui-ci dans au moins une direction (X).

5. Centre de cintrage selon une des revendications précédentes, caractérisé en ce que le dispositif de manipulation (30) présente un premier manipulateur (32) qui saisit la pièce de tôle (14) sur la table de chargement (22) et la déplace dans une première direction (X) et un deuxième manipulateur (36) qui prend la pièce de tôle (14) après le déplacement dans la première direction (X) et la déplace dans la deuxième direction (Y) et la fait pivoter autour de l'axe de rotation (D).

6. Centre de cintrage selon la revendication 5, caractérisé en ce que le premier manipulateur (32) saisit la pièce de tôle (14) sur un côté longitudinal (56) s'étendant environ dans la première direction (X).

7. Centre de cintrage selon une des revendications précédentes, caractérisé en ce que le capteur (66) détecte plusieurs points (82, 84, 86) d'une région de la bordure (56) de la pièce de tôle (14) orientée vers lui.

8. Centre de cintrage selon une des revendications 5 à 7, caractérisé en ce que le capteur (66) est placé sur le premier manipulateur (32) et peut être déplacé par celui-ci dans la première direction (X).

9. Centre de cintrage selon la revendication 8, caractérisé en ce que le capteur (66) est fixé sur le premier manipulateur (32) de manière à pouvoir se déplacer dans la deuxième direction (T).

10. Centre de cintrage selon la revendication 9, caractérisé en ce que la position du capteur (66) dans la deuxième direction (T) peut être commandée par la commande (38).

11. Centre de cintrage selon une des revendications 5 à 10, caractérisé en ce que le capteur (66) est placé sur un côté du premier manipulateur (32) orienté vers la table de chargement (22).

12. Centre de cintrage selon une des revendications précédentes, caractérisé en ce que la commande (38) en se basant sur des données relatives à une forme de la pièce de tôle (14) peut positionner le capteur (66) de telle manière qu'il détecte les arêtes (82, 84, 86) à partir d'encoches (80a à d) de la pièce de tôle (14).

13. Centre de cintrage selon une des revendications précédentes, caractérisé en ce que le capteur (66) comprend une barrière lumineuse disposée dans une jumelle (72) et en ce que la pièce de tôle (14) s'engage dans la jumelle (72) lors de la détermination des bords (82, 84, 86).

14. Procédé pour disposer une pièce de tôle (14) dans une cellule de dntrage (10) d'un centre de cintrage dans lequel la pièce de tôle (14) est saisie par un dispositif de manipulation (30) sur une table de chargement (22) et déplacée dans une première direction (X) et dans une deuxième direction (Y) transversale à la première direction et est introduite dans la cellule de cintrage (10) dans différentes positions de rotation autour d'un axe de rotation (D) perpendiculaire au plan formé par la première et la deuxième direction, dans lequel les coordonnées de la position de la pièce de tôle (14) par rapport à une position d'introduction définie dans la cellule de cintrage sont mesurées au moyen d'un capteur (66) et le dispositif de manipulation (30) maniant la pièce de tôle (14) corrige, en fonction des coordonnées de position mesurées, le déplacement dans la première et la deuxième direction (X, Y) ainsi que la rotation autour de l'axe de rotation (D) de telle manière que la pièce de tôle (14) est introduite dans la position d'introduction définie dans la cellule de cintrage (10), caractérisé en ce que le capteur (66) et la pièce de tôle (14) peuvent être déplacés l'un par rapport à l'autre par la commande (38) de telle manière que, pour déterminer les coordonnées de position de la pièce de tôle (14), le capteur (66) détecte plusieurs positions (82, 84, 86) des arêtes de coupe résultant d'un découpage préalable dans la pièce de tôle (14) et placées dans une disposition relative les unes par rapport aux autres comme repères précis pour la position d'introduction de la pièce de tôle (14).

15. Procédé selon la revendication 14, caractérisé en ce que les coordonnées de la position de la pièce de tôle (14) sont déterminées dans la région de la table de chargement (22).

16. Procédé selon la revendication 14 ou 15, caractérisé en ce que les coordonnées de la position de la pièce de tôle (14) sont mesurées avant le maniement de celle-ci par le dispositif de manipulation (30).

17. Procédé selon une des revendications 14 à 16, caractérisé en ce que lors de la détermination des coordonnées de la position de la pièce de tôle (14), le capteur (66) est déplacé par rapport à celle-ci.

18. Procédé selon la revendication 17, caractérisé en ce que le capteur (66) est déplacé lors de la mesure des coordonnées de position par le dispositif de manipulation (30) dans au moins une direction (X).

19. Procédé selon la revendication 18, caractérisé en ce que la position du capteur (66) dans la première direction (X) est déterminée par la position du dispositif de manipulation (30).

20. Procédé selon une des revendications 17 à 19, caractérisé en ce que le capteur (66) est déplacé dans une direction par le dispositif de manipulation (30) et que le capteur (66) est déplacé de manière automatique dans la deuxième direction (Y).

21. Procédé selon une des revendications 14 à 20, caractérisé en ce que la pièce de tôle (14) est éloignée de la table de chargement (22) dans la première direction (X) par un premier manipulateur (32) et mue dans la deuxième direction (Y) par un deuxième manipulateur (36) et mise en rotation autour de l'axe de rotation (D).

22. Procédé selon une des revendications 14 à 21, caractérisé en ce que des encoches (80a à d) de la pièce de tôle sont détectées.
